# EUROPÄISCHE PATENTSCHRIFT

(11) **EP 1 099 704 B1**
(45) Veröffentlichungstag und Bekanntmachung des Hinweises auf die Patenterteilung: **03.09.2003**
(21) Anmeldenummer: 00124046.4
(22) Anmeldetag: 04.11.2000
(51) Int. Cl.: C07F 9/165

(54) **Verfahren zur Herstellung von schwefel- und phosphorhaltigen Organosiliciumverbindungen**
Process for the preparation of sulfur and phosphorus-containing organosilicon compounds
Procédé pour la préparation de composés organosiliciés contenant du soufre et du phosphore

(30) Priorität: 13.11.1999 DE 19954815
(43) Veröffentlichungstag der Anmeldung: 16.05.2001
(73) Patentinhaber: Degussa AG, 40474 Düsseldorf (DE)
(72) Erfinder: Krafczyk, Roland, Dr., 63505 Langenselbold (DE); Münzenberg, Jörg, Dr., 63457 Hanau (DE); Zezulka, Gerd Rainhard, 63456 Hanau (DE)

(56) Entgegenhaltungen:
- DE-A- 2 658 368
- MURAV'EV I.V.: "Reactions of diphosphorus pentasulfide with alkyl halides" JOURNAL OF GENERAL CHEMISTRY USSR., Bd. 45, Nr. 8, - 20. Januar 1976 (1976-01-20) Seiten 1711-1713, XP002161609 CONSULTANTS BUREAU. NEW YORK., US
- NIZAMOV I S ET AL: "Influence of nucleophilic reagents on the reactions of phosphorus sulfides and alkyl homologs of Davy's reagent with alkyl halides and dialkyl disulfides" PHOSPHORUS, SULFUR SILICON RELAT. ELEM. (PSSLEC,10426507);1998; VOL.132,; PP.85-100, XP000982602 Russian Academy of Sciences;A. E. Arbuzov Institute of Organic and Physical Chemistry; Kazan; 420088; Russia (RU)

## Beschreibung

Die Erfindung betrifft ein Verfahren zur Herstellung von schwefel- und phosphorhaltigen Organosiliziumverbindungen.

Aus DE 2658368 C2 sind Verbindungen der Formel

[R¹ ₙ(R²O)₃₋ₙ-Si-Alk-S-]₃P=S,

in der Alk eine Alkylengruppe mit 2 bis 4 Kohlenstoffatomen, R¹, R² eine Alkylgruppe mit 1 bis 5 Kohlenstoffatomen, eine Cycloalkylgruppe mit 5 bis 8 Kohlenstoffatomen, eine Phenylgruppe, eine Benzylgruppe oder die 2-Methoxyethylgruppe, wobei R¹ oder R² jeweils die gleiche oder verschiedene Bedeutungen haben können und n=0, 1 oder 2 bedeuten, bekannt. Zur Herstellung dieser Verbindungen wird Thiophosphorylchlorid oder -bromid mit einem Mercaptosilan der Formel

R¹ ₙ(R²O)₃₋ₙ-Si-Alk-SH

mit den oben angegebenen Bedeutungen umgesetzt.

Mercaptosilane sind teure Ausgangsverbindungen, da sie in der Regel aus den entsprechenden Chlorsilanen hergestellt werden (EP 471 164 B1, DE-AS 20 35 619, DE-PS 33 46 910, US-PS 3 849 471, GB-PS 1 102 251).

Der Nachteil dieser bekannten Verfahren besteht darin, daß zur Herstellung der oben genannten phosphorhaltigen Verbindungen teures Mercaptosilan als Edukt verwendet wird.

Aufgabe der Erfindung ist es, ein alternatives Verfahren zur Herstellung von schwefel- und phosphorhaltigen Organosiliziumverbindungen bereitzustellen.

Gegenstand der Erfindung ist ein Verfahren zur Herstellung von schwefel- und phosphorhaltigen Verbindungen der Formel

[R¹ ₙ(R²O)₃₋ₙ-Si-Alk-S-]₃P=S,

in der Alk eine Alkylengruppe mit 1 bis 10 Kohlenstoffatomen, R¹, R² eine Alkylgruppe mit 1 bis 5 Kohlenstoffatomen, eine Cycloalkylgruppe mit 5 bis 8 Kohlenstoffatomen, eine Phenylgruppe, eine Benzylgruppe oder eine 2-Methoxyethylgruppe, wobei R¹ oder R² jeweils die gleiche oder verschiedene Bedeutungen haben können und n=0, 1 oder 2 bedeuten, welches dadurch gekennzeichnet ist, daß man halogenhaltige Silane der Formel

R¹ ₙ(R²O)₃₋ₙ-Si-Alk-Hal,

in der Alk eine Alkylengruppe mit 1 bis 10 Kohlenstoffatomen, R¹, R² eine Alkylgruppe mit 1 bis 5 Kohlenstoffatomen, eine Cycloalkylgruppe mit 5 bis 8 Kohlenstoffatomen, eine Phenylgruppe, eine Benzylgruppe oder eine 2-Methoxyethylgruppe, wobei R¹ oder R² jeweils die gleiche oder verschiedene Bedeutungen haben können, Hal ein Halogen, vorzugsweise Chlor oder Brom, und n=0, 1 oder 2 bedeuten, mit Phosphorpentasulfid (P₄S₁₀) und einem Metallsulfid umsetzt.

Die Reaktion kann nach der Gleichung 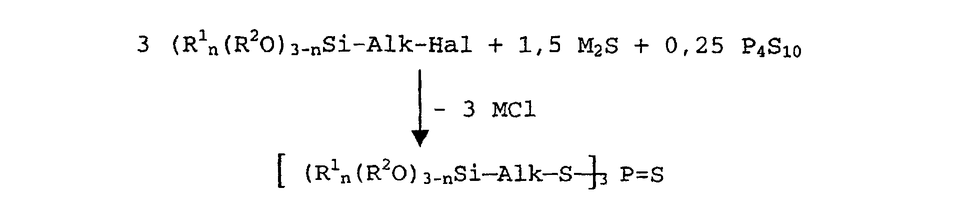 erfolgen. Die Reaktion kann man in einem Lösungsmittel, vorzugsweise Hexan, Acetonitril, Toluol, Heptan oder Cyclohexan, durchführen. Da sich Phosphorpentasulfid in R¹ₙ(R₂O)₃₋ₙ-Si-Alk-Hal löst, kann man die Reaktion ohne Lösungsmittel durchführen. Die Reaktion kann man unter Ausschluß von Luft und Feuchtigkeit durchführen.

Die Reaktion kann man unter Schutzgas, vorzugsweise Stickstoff, Argon oder Helium, durchführen. Die Reaktion kann man bei Temperaturen von 20° bis 300°C, vorzugsweise 150° bis 250° C, durchführen. Als Metallsulfid kann man Natriumsulfid (Na₂S), Kaliumsulfid (K₂S) oder Ammoniumsulfid ((NH₄)₂S) verwenden.

Die erfindungsgemäß hergestellten schwefel- und phosphorhaltigen Verbindungen können in Kautschukmischungen verwendet werden.

### Beispiel:

In einem 500 ml Dreihalskolben wird in einer Argonatmosphäre ein Gemisch aus 30,8 g (69,2 mmol) P₄S₁₀, 200,0 g (830,3 mmol) Chlorpropyltriethoxysilan und 32,4 g (415,3 mmol) Natriumsulfid (Na₂S) vorgelegt und auf 200° C erhitzt. Nach 2.5 h Rühren bei 200° C wird von unlöslichen Bestandteilen abfiltriert. Alle flüchtigen Bestandteile werden im Vakuum entfernt. Man erhält 168,5 g (79 % Ausbeute) an Tetrathiophosphorsäure-S,S,Stris(triethoxysilylpropyl)ester als hellgelbe klare Flüssigkeit.

¹H-NMR (CDCl₃): δ 0,75 (m, ²*J*_{H-Si} = 111,4 Hz, 6 H, Si-CH₂-CH₂-CH₂-S-), 1,22 (t, ³*J*_{H-H} = 7,4 Hz, 27 H, CH₃-CH₂-O-Si), 1,85 (dm, ³*J*_{H-H} = 7,5 Hz, 6 H, Si-CH₂-CH₂-CH₂-S-), 3,02 (dt, ³*J*_{H-H} = 7,5 Hz, ³*J*_{H-P} = 17,0 Hz, 6 H, Si-CH₂-CH₂-CH₂-S-), 3,82 (q, ³*J*_{H-H} = 7,4 Hz, 18 H, CH₃-CH₂-O-Si). ³¹P-NMR (CDCl₃): δ 94,5 (s).

## Patentansprüche

1. Verfahren zur Herstellung von schwefel- und phosphorhaltigen Verbindungen der Formel
[R¹ ₙ(R²O)₃₋ₙ-Si-Alk-S-]₃P=S,
in der Alk eine Alkylengruppe mit 1 bis 10 Kohlenstoffatomen, R¹, R² eine Alkylgruppe mit 1 bis 5 Kohlenstoffatomen, eine Cycloalkylgruppe mit 5 bis 8 Kohlenstoffatomen, eine Phenylgruppe, eine Benzylgruppe oder eine 2-Methoxyethylgruppe, wobei R¹ oder R² jeweils die gleiche oder verschiedene Bedeutungen haben können und n=0, 1 oder 2 bedeuten, **dadurch gekennzeichnet, daß** man halogenhaltige Silane der Formel
R¹ ₙ(R²O)₃₋ₙ-Si-Alk-Hal,
in der Alk eine Alkylengruppe mit 1 bis 10 Kohlenstoffatomen, R¹, R² eine Alkylgruppe mit 1 bis 5 Kohlenstoffatomen, eine Cycloalkylgruppe mit 5 bis 8 Kohlenstoffatomen, eine Phenylgruppe, eine Benzylgruppe oder eine 2-Methoxyethylgruppe, wobei R¹ oder R² jeweils die gleiche oder verschiedene Bedeutungen haben können, Hal ein Halogen und n=0, 1 oder 2 bedeuten, mit Phosphorpentasulfid (P₄S₁₀) und einem Metallsulfid umsetzt.

2. Verfahren zur Herstellung von schwefel- und phosphorhaltigen Verbindungen nach Anspruch 1, **dadurch gekennzeichnet, daß** man als Halogen Chlor oder Brom verwendet.

3. Verfahren zur Herstellung von schwefel- und phosphorhaltigen Verbindungen nach Anspruch 1, **dadurch gekennzeichnet, daß** man als Metallsulfid Natriumsulfid (Na₂S), Kaliumsulfid (K₂S) oder Ammoniumsulfid ((NH₄)₂S) verwendet.

4. Verfahren zur Herstellung von schwefel- und phosphorhaltigen Verbindungen nach Anspruch 1, **dadurch gekennzeichnet, daß** man die Reaktion in einem Lösungsmittel durchführt.

5. Verfahren zur Herstellung von schwefel- und phosphorhaltigen Verbindungen nach Anspruch 1, **dadurch gekennzeichnet, daß** man die Reaktion ohne Lösungsmittel durchführt.

## Claims

1. A process for preparing sulfur- and phosphorus-containing compounds of the formula
R¹ ₙ(R²O)₃₋ₙ-Si-Alk-S-]₃P=S
in which Alk represents an alkylene group with 1 to 10 carbon atoms, R¹ and R² represent an alkyl group with 1 to 5 carbon atoms, a cycloalkyl group with 5 to 8 carbon atoms, a phenyl group, a benzyl group or a 2-methoxyethyl group, wherein each R¹ or R² may be defined in the same way or differently and n = 0, 1 or 2, **characterised in that** halogen-containing silanes of the formula
R¹ ₙ(R²O)₃₋ₙ-Si-Alk-Hal
in which Alk represents an alkylene group with 1 to 10 carbon atoms, R¹ and R² represent an alkyl group with 1 to 5 carbon atoms, a cycloalkyl group with 5 to 8 carbon atoms, a phenyl group, a benzyl group or a 2-methoxyethyl group, wherein each R¹ or R² may be defined in the same way or differently, Hal represents a halogen and n = 0, 1 or 2, react with phosphorus pentasulfide (P₄S₁₀) and a metal sulfide.

2. A process for preparing sulfur- and phosphorus-containing compounds according to Claim 1, **characterised in that** chlorine or bromine is used as the halogen.

3. A process for preparing sulfur- and phosphorus-containing compounds according to Claim 1, **characterised in that** sodium sulfide (Na₂S), potassium sulfide (K₂S) or ammonium sulfide ((NH₄)₂S) is used as the metal sulfide.

4. A process for preparing sulfur- and phosphorus-containing compounds according to Claim 1, **characterised in that** the reaction is performed in a solvent.

5. A process for preparing sulfur- and phosphorus-containing compounds according to Claim 1, **characterised in that** the reaction is performed without a solvent.

## Revendications

1. Procédé de préparation de composés contenant du soufre et du phosphore de formule :
[R¹ ₙ(R²O)₃₋ₙ-Si-Alk-S-]₃ P=S,
dans laquelle Alk signifie un groupe alkylène ayant de 2 à 4 atomes de carbone, R¹ et R² un groupe alkyle ayant de 1 à 5 atomes de carbone, un groupe cycloalkyle ayant de 5 à 8 atomes de carbone, un groupe phényle, un groupe benzyle, ou le groupe 2-méthoxyéthylé, dans laquelle R¹ ou R² respectivement peuvent avoir des significations identiques ou différentes, et n=0, 1 ou 2,
**caractérisé en ce qu'**
on fait réagir des silanes contenant un halogène de formule :
[R¹ ₙ(R²O)₃₋ₙ-Si-Alk-Hal
dans laquelle Alk signifie un groupe alkylène ayant de 1 à 10 atomes de carbone, R¹ et R² un groupe alkyle ayant de 1 à 5 atomes de carbone, un groupe cycloalkyle ayant de 5 à 8 atomes de carbone, un groupe phényle, un groupe benzyle, ou le groupe 2-méthoxyéthylé, dans laquelle R¹ ou R² respectivement peuvent avoir des significations identiques ou différentes, Hal signifie un halogène, et n est égal à 0, 1 ou 2, avec du pentasulfure de phosphore (P₄S₁₀) et sulfure métallique.

2. Procédé de préparation de composés contenant du soufre et du phosphore selon la revendication 1,
**caractérisé en ce qu'**
on utilise comme halogène du chlore et du brome.

3. Procédé de préparation de composés contenant du soufre et du phosphore selon la revendication 1,
**caractérisé en ce qu'**
on utilise comme sulfure métallique, du sulfure de sodium (SNa₂), du sulfure de potassium (SK₂) ou du sulfure d'ammonium (S(NH₄)₂).

4. Procédé de préparation de composés contenant du soufre et du phosphore selon la revendication 1,
**caractérisé en ce qu'**
on effectue la réaction dans un solvant.

5. Procédé de préparation de composés contenant du soufre et du phosphore selon la revendication 1,
**caractérisé en ce qu'**
on effectue la réaction sans solvant.
